# FASCICULE DE BREVET EUROPEEN

(11) **EP 3 393 660 B1**
(45) Date de publication et mention de la délivrance du brevet: **10.07.2024**
(21) Numéro de dépôt: 16829418.9
(22) Date de dépôt: 22.12.2016
(51) Int. Cl.: B01L 1/02, B08B 15/02, B25J 21/02

(54) **PROCEDE DE FABRICATION D'UN RECIPIENT ETANCHE**
VERFAHREN ZUR HERSTELLUNG EINES VERSIEGELTEN BEHÄLTERS
METHOD FOR MANUFACTURING A SEALED CONTAINER

(30) Priorité: 23.12.2015 FR 1563162
(43) Date de publication de la demande: 31.10.2018
(73) Titulaire: Sartorius Stedim Aseptics, 65100 Lourdes (FR)
(72) Inventeur: PALLARES, Alain, 13720 La Bouilladisse (FR); LABEDAN, Mathieu, 33850 Leognan (FR)
(74) Mandataire: Novagraaf International SA
(86) Numéro de dépôt international: PCT/FR2016/053624
(87) Numéro de publication internationale: WO 2017/109420

(56) Documents cités:
- EP-A1- 0 688 020
- FR-A1- 2 951 516

## Description

La présente invention est relative aux récipients étanches dans le domaine pharmaceutique ou biotechnologique.

Plus particulièrement, l'invention se rapporte aux récipients étanches utilisés dans des ensembles étanches entre une enceinte stérile telle qu'un isolateur et un ou plusieurs desdits récipients. Dans ce domaine, il est connu d'utiliser une enceinte stérile comprenant une pluralité de portes, et de raccorder au niveau de ces portes des récipients, eux-mêmes équipés de portes. Les portes sont ouvertes suite au raccord entre l'enceinte stérile et le récipient extérieur, pour permettre un transfert d'objets contenus dans le récipient vers l'enceinte stérile, voire le cas échéant dans le sens opposé.

On connait déjà usuellement des procédés de fabrication de récipients étanches pour des applications biopharmaceutiques, tels que le récipient décrit dans FR2721289. Il s'agit en particulier de monter un assemblage étanche en assemblant une poche comprenant une paroi et une ouverture d'accès à un connecteur muni d'une porte, l'autre ouverture d'accès de la poche étant destinée à être fermée. Un mode de fabrication connu d'un tel assemblage pour un tel récipient est par insertion de l'épaisseur de la paroi de la poche au niveau de son ouverture d'accès entre le connecteur et une pièce complémentaire qui vient serrer l'assemblage précédent. Cependant, ce type de récipient est destiné à être soumis à des contraintes importantes, et un risque de perte d'étanchéité au niveau de l'assemblage, ou d'affaiblissement du matériau constitutif de la poche pouvant à terme conduire à une rupture, existe toujours. On cherche donc à réduire de tels risques pour les applications toujours plus exigeantes visées dans le domaine biopharmaceutique.

La recherche d'une autre solution pour assurer une meilleure étanchéité a conduit à considérer un assemblage par soudure entre la poche et le connecteur. Toutefois, un tel mode d'assemblage pose un problème au niveau des matériaux habituels constitutifs de ces composants, qui ne sont pas assez compatibles pour qu'un assemblage par soudure soit possible (résistance en température) et garantisse de meilleures performances.

Le document EP0688020A1 présente un dispositif de jonction étanche entre deux enceintes isolées d'un milieu extérieur.

On cherche donc une solution alternative à ces procédés de fabrication d'assemblage étanches.

A cet effet, un procédé de fabrication d'un assemblage étanche, un assemblage étanche, un récipient étanche, et un ensemble étanche selon l'invention sont présentés dans les revendications.

D'autres caractéristiques et avantages de l'invention apparaîtront au cours de la description suivante d'une de ses formes de réalisation, donnée à titre d'exemple non limitatif, en regard des dessins joints.

Sur les dessins :
- les figures 1a et 1b illustrent le récipient étanche dans le cas où la poche est soudée et dans le cas où est montée une surface de fermeture,
- la figure 2 illustre un premier mode de réalisation de l'assemblage de la poche au surmoulage,
- la figure 3 illustre un deuxième mode de réalisation de l'assemblage de la poche au surmoulage,
- la figure 4 illustre le cas d'un élément saillant au niveau de la portion de fixation,
- la figure 5 illustre la fabrication d'un assemblage étanche,
- la figure 6 illustre le moulage du surmoulage,
- la figure 7 représente l'assemblage entre le récipient et une enceinte par accouplage des portes intermédiaires
- la figure 8 illustre le cas du récipient utilisant une poche raft ^{©}

Sur les différentes figures, les mêmes références désignent des éléments identiques ou similaires.

La présente invention concerne des récipients étanches et leur fabrication pour des applications de type pharmaceutique ou biotechnologique nécessitant de limiter ou d'éviter toute contamination, y compris par des particules en provenance du milieu extérieur.

Il s'agira typiquement d'obtenir une poche dont le contenu doit être isolé du milieu extérieur, assemblée à une autre enceinte, tel qu'un isolateur, pour un transfert stérile entre la poche et l'enceinte. Une application typique sera d'utiliser un tel récipient pour transférer du matériel de conditionnement ou des bouchons de seringue de façon stérile d'une poche dans laquelle ils sont initialement contenus et stérilisés vers un isolateur.

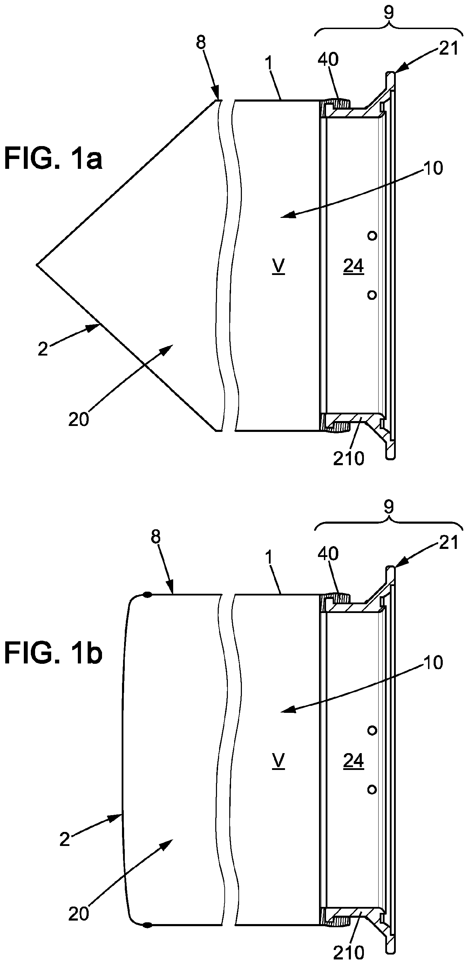

La **figure 1** représente un récipient étanche. Ledit récipient comprend un assemblage étanche dont la deuxième ouverture d'accès 20 est obturée de façon étanche.

Plus précisément l'assemblage étanche comprend une poche 1 comprenant une paroi 8 en film souple, la paroi 8 de ladite poche définissant un volume intérieur V de ladite poche, ladite poche 1 ayant deux extrémités opposées, une première ouverture d'accès 10 adaptée pour pouvoir faire communiquer le volume intérieur de la poche avec l'extérieur de la poche à la première extrémité, une deuxième ouverture d'accès 20 adaptée pour pouvoir faire communiquer le volume intérieur de la poche avec l'extérieur de la poche à la deuxième extrémité. Le récipient comprend également un système de connexion 9 qui compte un connecteur 21 comprenant une portion de fixation 210 et un surmoulage 40 surmoulé sur la portion de fixation 210. La paroi de la poche est positionnée en regard du surmoulage au niveau de la première ouverture d'accès 10, la paroi de la poche étant soudée sur le surmoulage 40. La deuxième ouverture d'accès 20 de ladite poche 1 est fermée de façon étanche.

Ledit assemblage peut être fermé de façon étanche au niveau du connecteur 21.

Ledit assemblage peut notamment être connecté à un connecteur complémentaire d'une enceinte stérile, un tel assemblage entre les connecteurs permettant une communication stérile entre le contenu de la poche 1 et l'enceinte 11. La portion de fixation 210 se trouve au niveau de l'ouverture d'accès de la poche 1 et entoure un espace de passage 24 entre la poche 1 et l'enceinte 11 au niveau de l'ouverture d'accès 10. L'assemblage ainsi formé peut par exemple être amovible et transportable, par exemple à usage unique, l'assemblage étant petit, la poche étant souple, ce qui permet de limiter l'encombrement pour le transport et la livraison de ces récipients.

La deuxième ouverture d'accès 20 est ensuite obturée de façon étanche formant ainsi une poche, après notamment introduction des produits dans la poche 1. Selon une première variante, la deuxième ouverture d'accès 20 est obturée par une surface de fermeture 2, la surface de fermeture 2 étant adaptée pour se fixer à la paroi de la poche 1 au niveau de sa deuxième ouverture d'accès 20 (figure 1b). En substance, chaque point de la circonférence de la surface de fermeture 2 est fixé en un point de la circonférence de la deuxième ouverture d'accès 20 de la poche 1, de façon idéalement bijective. Selon une deuxième variante, la deuxième ouverture d'accès 20 est obturée par une soudure sur elle-même de la paroi de la poche 1 au niveau de sa deuxième ouverture d'accès 20 (figure 1a). En substance l'ensemble des points de la circonférence de la surface de fermeture 2 sont soudés ensemble en idéalement un point.

A l'usage, le volume intérieur V de ladite poche 1 est rempli du matériel à introduire dans l'enceinte 11 comme par exemple d'éléments tels que des bouchons de seringue. Le contenu du récipient ainsi formé est ensuite par exemple stérilisé aux rayons gamma.

La stérilisation peut par exemple être faite à travers la paroi 8 de la poche. Une partie de la paroi de la poche 1 peut par exemple être en Tyvec^{®} qui est un matériau perméable à la vapeur. La poche est par exemple dans ce cas ensuite sur-emballée pour garantir sa stérilité jusqu'à utilisation. Dans le cas où la deuxième ouverture d'accès 20 est fermée par une surface de fermeture, la stérilisation peut être faite à travers la surface de fermeture 2 qui peut par exemple être en Tyvec^{®}.

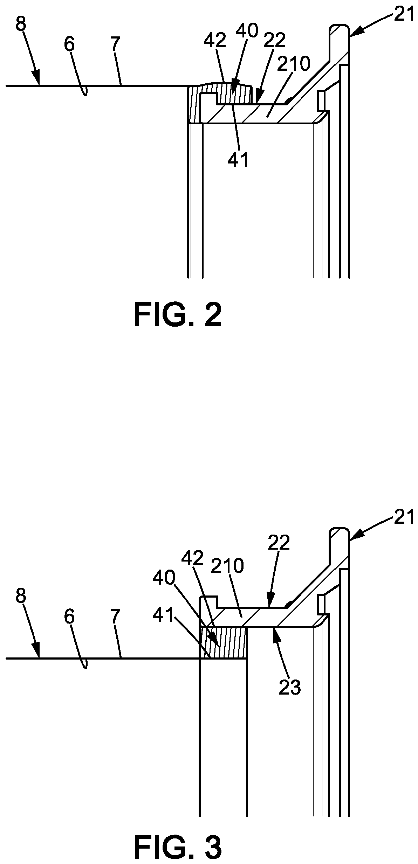

Plus précisément dans un premier mode de réalisation illustré à la **figure 2****,** le connecteur 21 comprend une surface radialement extérieure 22 orientée radialement vers l'extérieur du connecteur 21, et le surmoulage 40 comprend une surface radialement intérieure 41 et une surface radialement extérieure 42 opposée à la surface radialement intérieure 41 du surmoulage 40. De plus la poche 1 comprend une surface intérieure 6 tournée vers le volume intérieur V. Dans le récipient ainsi formé, la surface radialement extérieure 22 du connecteur 21 est en regard avec la surface radialement intérieure 41 du surmoulage 40, tel que lors de l'étape de positionnement du surmoulage 40 en regard de la paroi de la poche 1, la surface radialement extérieure 42 du surmoulage 40 est également mise en regard avec la surface intérieure 6 de la poche 1. Ainsi au niveau de la première ouverture d'accès 10 de la poche 1, le passage entre la poche 1 et l'extérieur est constitué de la superposition, en allant de l'intérieur vers l'extérieur, de l'épaisseur du connecteur 21 au niveau de sa portion de fixation, de l'épaisseur du surmoulage et de l'épaisseur de la paroi de la poche 1.

En particulier, la paroi 8 de la poche est en film souple et soudée sur le surmoulage 40 de manière continue fermée le long de la première ouverture d'accès 10.

Dans un autre mode de réalisation illustré à la **figure 3****,** ledit connecteur 21 comprend une surface radialement intérieure 23 orientée radialement vers l'intérieur du connecteur 21, et le surmoulage 40 comprend une surface radialement intérieure 41 et une surface radialement extérieure 42 opposée à la surface radialement intérieure 41 du surmoulage 40. De plus la poche 1 comprend une surface extérieure 7 opposée à la surface intérieure 6. Dans le récipient ainsi formé, la surface radialement intérieure 23 du connecteur 21 est en regard de la surface radialement extérieure 42 du surmoulage 40, tel que lors de l'étape de positionnement du surmoulage 40 en regard de la paroi 8 de la poche 1, la surface radialement intérieure 41 du surmoulage 40 est également mise en regard avec la surface extérieure 7 de la paroi 8 de la poche 1. Ainsi au niveau de la première ouverture d'accès de la poche 1, le passage entre la poche 1 et l'extérieur est constitué de la superposition, en allant de l'intérieur vers l'extérieur, de l'épaisseur de la paroi de la poche 1, de l'épaisseur du surmoulage et de l'épaisseur du connecteur 21 au niveau de sa portion de fixation.

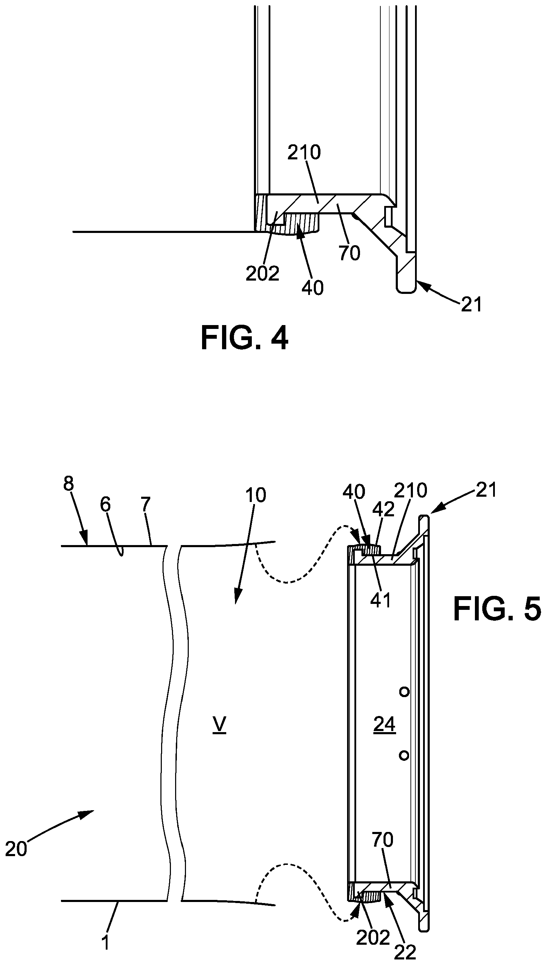

En particulier, comme illustré à la **figure 4****,** la portion de fixation 210 du connecteur 21 peut comprendre un corps 70 avec un élément saillant 202 qui s'étend radialement depuis ledit corps principal 70. Ledit élément saillant 202 est adapté pour être encapsulé dans le surmoulage 40. L'épaisseur du corps au niveau de l'élément saillant 202 est typiquement deux à trois fois supérieure à celle du corps au niveau où il n'y a pas d'élément saillant.

Le procédé de fabrication de l'assemblage illustré à **la** **figure 5** comprend les étapes suivantes dans l'ordre :
- positionner la paroi de la poche 1 en regard du surmoulage 40 au niveau de la première ouverture d'accès 10, le surmoulage 40, porté par le connecteur 21, étant par exemple inséré dans la poche 1 par son ouverture d'accès 10, à proximité de l'ouverture d'accès 10 de la poche 1,
- souder la paroi de la poche 1, au niveau de sa première ouverture d'accès, sur le surmoulage 40, de manière continue fermée le long de la première ouverture d'accès.

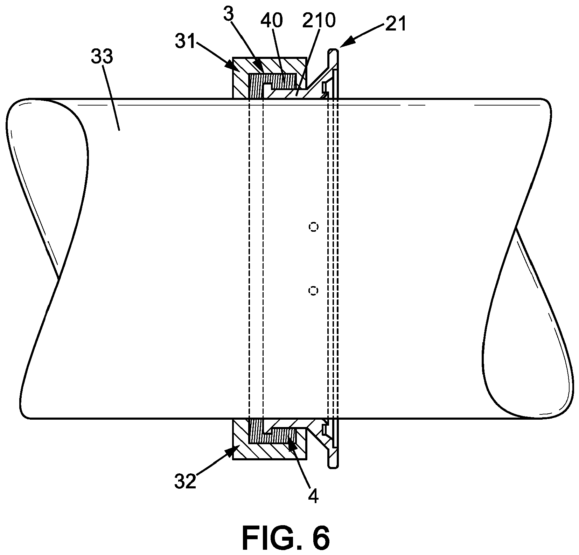

Le procédé de fabrication comprend également une étape d'obtention du surmoulage 40, illustrée à la **figure 6****.** Dans cette étape d'obtention du surmoulage 40, on fournit un élément de moulage 3 adapté pour entourer au moins partiellement la portion de fixation 210. L'élément de moulage comprend par exemple deux empreintes semi-circulaires 31 et 32 ainsi qu'une section tubulaire 33 utilisée pour contenir la matière. On fournit également un produit pour moulage 4 dans un matériau adapté pour que puisse être soudée sur ledit produit la paroi en film souple de la poche.

Le procédé inclut au moins les trois étapes suivantes. Il s'agit d'une part d'entourer au moins partiellement la portion de fixation 210 du connecteur 21 par l'élément de moulage 3 de manière à définir une cavité fermée entre la portion de fixation 210 et l'élément de moulage 3. Il s'agit ensuite de verser ou injecter le produit pour moulage 4 entre la portion de fixation 210 et l'élément de moulage 3. Il s'agit finalement de retirer l'élément de moulage 3, libérant le surmoulage 40 sur au moins une partie de la portion de fixation 210. La pièce 21 est par exemple obtenue par moulage par injection en utilisant un élément de moulage 30.

Dans le cas où la portion de fixation 210 du connecteur est par exemple annulaire, l'élément de moulage 3 est également annulaire tel qu'il entoure l'épaisseur du connecteur 21 au niveau de sa portion de fixation 210. Le surmoulage 40 ainsi obtenu est alors également annulaire. La soudure est alors une soudure circulaire.

Un tel procédé de fabrication sera notamment utilisé pour assembler une poche en film plastique avec un connecteur 21 en polycarbonate (PC) ou acrylonitrile butadiène styrène (ABS) ou en polyvinyldene fluoride (PVDF) ou en polybutylene terephthalate (PBT). De tels matériaux pour le connecteur 21 seront rigides pouvant supporter les efforts de verrouillage du deuxième connecteur et résistant aux différents traitements associés à la stérilisation vapeur (à des températures inférieures à 125°C), gamma ou à l'oxyde d'éthylène.

Le film plastique pourra être notamment du polyéthylène (PE), du polyéthylène haute densité (HDPE) ou du polyéthylène basse densité (LDPE).

Le produit de moulage 4 sera alors par exemple du polyéthylène (PE), haute densité (HDPE) ou sous forme d'élastomère thermoplastique (TPE) ou pourra également être de l'élastomère thermoplastique. Le surmoulage 4 dans de telles matières résiste mal à la stérilisation (< 125°C) et aura également tendance à se déformer aux températures de travail de soudure au-delà de 120°C, sa résistance mécanique étant alors insuffisante à ces températures, mais ne va pas fondre à la montée en température lorsqu'il est monté sur le connecteur qui « encaissera » alors sa déformation.

Il est cependant démontré par les tests que la soudure du film plastique sur le surmoulage résiste bien à la stérilisation aux rayons gamma ou à la stérilisation vapeur.

Pour réaliser la soudure le film et le surmoulage commenceront à fondre quasiment en même temps donc dans des plages de température proches de l'ordre de 120°C (loin des températures de soudure des matériaux choisis pour le connecteur 21 plutôt de l'ordre de 200°C).

On envisagera avantageusement le cas où
- le connecteur 21 est en polyvinyldene fluoride (PVDF) et le surmoulage 40 est en polyéthylène haute densité (HDPE) ou en élastomère thermoplastique (TPE) ;
- le connecteur 21 est en polycarbonate (PC) et le surmoulage 40 est en polyéthylène haute densité (HDPE) ou en élastomère thermoplastique (TPE) ;
- le connecteur 21 est en acrylonitrile butadiène styrène (ABS) et le surmoulage 40 est en polyéthylène haute densité (HDPE) ou en élastomère thermoplastique (TPE) ;
- le connecteur 21 est en polybutylene terephthalate (PBT) et le surmoulage 40 est en polyéthylène haute densité (HDPE).

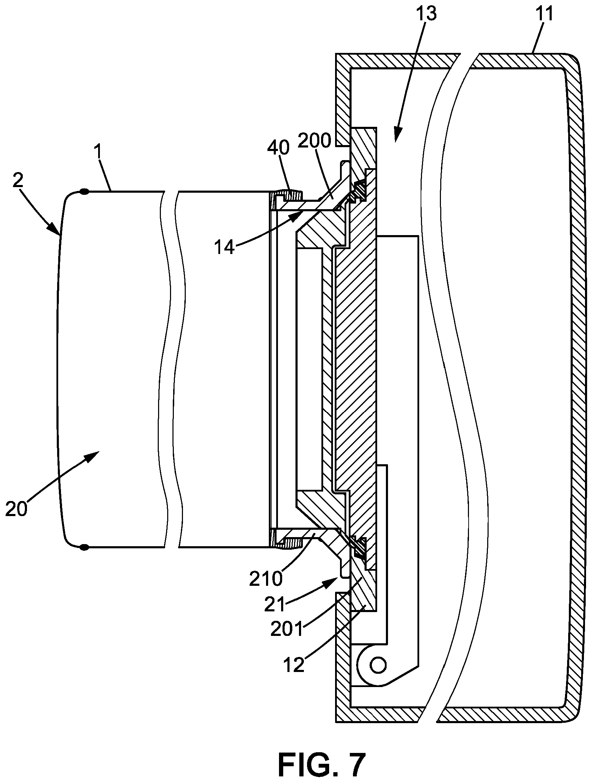

Dans un mode particulier de réalisation illustré à la figure 7, le connecteur 21 comprend par exemple une première porte 14 adaptée pour équiper l'ouverture d'accès 10 de la poche 1. La première porte 14 comprend un dormant en forme de bride 200, la portion de fixation 210 faisant au moins partie de la bride 200. Ainsi la première porte 14 peut être utilisée pour fermer de façon étanche le récipient.

On peut alors constituer un ensemble étanche en assemblant le récipient étanche décrit ci-dessus à une enceinte 11. Un tel ensemble temporaire peut par exemple permettre d'assurer un transfert propre d'un contenu biopharmaceutique entre la poche ainsi constituée et l'enceinte 11.

L'enceinte 11 comprend par exemple également une deuxième porte 12, comprenant un dormant en forme de bride 201, ladite deuxième porte 12 étant adaptée pour équiper une ouverture d'accès 13 de cette enceinte 11 et étant complémentaire à la première porte 14.

Plus précisément, chaque porte peut être circulaire, la dimension diamétrale de la deuxième porte 12 étant supérieure à la dimension de l'ouverture ménagée dans la bride 200 pour la première porte. Chaque porte est munie de moyens d'étanchéité avec sa bride, tel qu'un joint annulaire compressible porté par la bride et coopérant avec une portée de ladite porte. Chaque porte est également associée à des moyens de verrouillage en position fermée sur sa bride. Pour positionner la bride 200 de la première porte par rapport à la bride 201 de la deuxième porte, la bride 201 de la deuxième porte est solidaire de plusieurs doigts longitudinaux saillant vers l'extérieur et aptes à coopérer avec des échancrures circulaires ménagées dans la périphérie de la bride 200 de la première porte. En l'absence de tout transfert, chacune des portes est verrouillée sur sa bride. Lorsqu'il s'agit de transférer le contenu de la poche à l'enceinte 11, la bride de la première porte 200 est amenée contre celle de la deuxième porte 201 où elle est positionnée par les doigts puis définitivement par engagement d'un bossage central de la deuxième porte dans un embrèvement de la première porte. Les deux brides sont ensuite verrouillées ensemble dans la position dite accouplée puis les deux portes sont déverrouillées pour permettre la communication entre la poche et l'enceinte 11.

A titre d'exemple l'une des enceintes est par exemple constituée par un isolateur et la poche contient un ou des objets ou une charge à transférer dans la position accouplée par le passage ainsi établi entre les deux enceintes, par exemple pour approvisionner la salle blanche en composants ou produits requis pour une fabrication ou production en cours dans la salle blanche, ou à l'inverse pour évacuer des déchets ou des produits de ladite salle blanche. La poche peut contenir des objets stériles, bouchons, tuyaux, pistons de seringue.

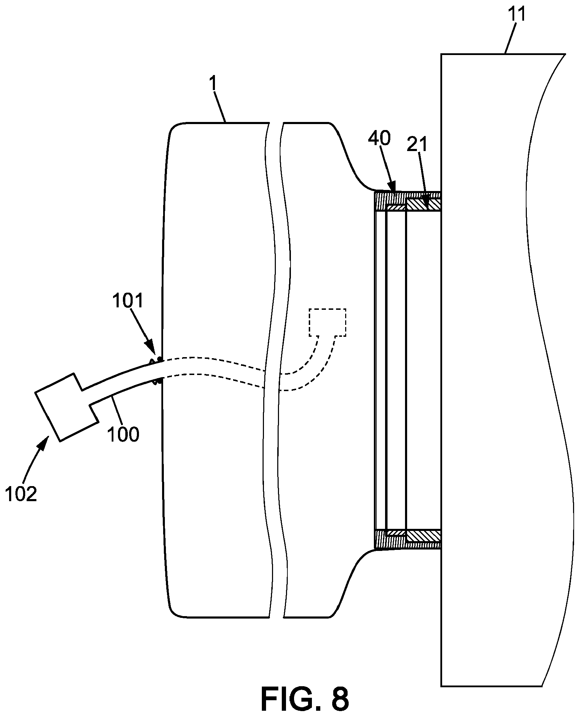

La poche peut être en particulier une poche raft^{©} comme illustré à la **figure 8****.** Dans ce cas, un tuyau 100 d'un connecteur aseptique 102 traverse stérilement la paroi 8 de la poche 1 et via un connecteur 101. Ledit tuyau 100 pourra ainsi alors être inséré stérilement dans l'enceinte 11 pour former une ligne stérile entre une extrémité du tuyau 100, par laquelle peuvent être entrés des produits, et l'enceinte 11 jusqu'à laquelle les produits peuvent être acheminés.

Dans un autre mode particulier de réalisation le surmoulage est assemblé sur un côté du film plastique par l'ajustement du diamètre du trou avec l'élasticité du film utilisé permettant un montage du connecteur appelé montage à plat.

## Revendications

1. Procédé de fabrication d'un assemblage étanche dans lequel:
- on fournit une poche (1) comprenant une paroi (8) en film souple, la paroi de ladite poche définissant un volume intérieur (V) de ladite poche, ladite poche (1) ayant deux extrémités opposées, une première ouverture d'accès (10) à la première extrémité adaptée pour pouvoir faire communiquer le volume intérieur de la poche avec l'extérieur de la poche, une deuxième ouverture d'accès (20) à la deuxième extrémité adaptée pour pouvoir faire communiquer le volume intérieur de la poche avec l'extérieur de la poche,
- on fournit un système de connexion (9), le système de connexion (9) comprenant un connecteur (21) adapté pour être mécaniquement connecté à un connecteur complémentaire d'une enceinte stérile (11) en vue d'une communication stérile entre la poche (1) et l'enceinte (11), le connecteur (21) comprenant une portion de fixation à la poche (210), **caractérisé en ce que** le système de connexion (9) comprend en outre un surmoulage (40) surmoulé sur la portion de fixation (210) et choisi dans un matériau adapté permettant le soudage de la paroi de poche (1) sur le surmoulage (40),
le procédé de fabrication comprenant en outre les étapes suivantes:
- positionner la paroi de la poche (1) en regard du surmoulage (40) au niveau de la première ouverture d'accès (10), la portion de fixation (210) entourant un espace de passage (24) entre la poche (1) et l'enceinte (11) au niveau de la dite première ouverture d'accès (10),
- souder la paroi de la poche (1) sur le surmoulage (40) de manière continue fermée le long de la première ouverture d'accès (10) à une température permettant que la paroi de la poche (1) et le surmoulage (40) fondent sans que le connecteur ne fonde.

2. Procédé de fabrication d'un assemblage étanche selon la revendication 1 dans lequel
- ledit connecteur (21) comprend une surface radialement extérieure (22) orientée radialement vers l'extérieur du connecteur (21),
- le surmoulage (40) comprend une surface radialement intérieure (41) et une surface radialement extérieure (42) opposée à la surface radialement intérieure (41) du surmoulage (40),
- la poche (1) comprend une surface intérieure (6) tournée vers le volume intérieur (V),
la surface radialement extérieure (22) du connecteur (21) étant en regard avec la surface radialement intérieure (41) du surmoulage (40),
tel que lors de l'étape de positionnement du surmoulage (40) en regard de la paroi de la poche (1), la surface radialement extérieure (42) du surmoulage (40) est également mise en regard avec la surface intérieure (6) de la poche (1).

3. Procédé de fabrication d'un assemblage étanche selon l'une quelconque des revendications 1 à 2 comprenant en outre une étape d'obtention du surmoulage (40), dans laquelle :
- on fournit un élément de moulage (3) adapté pour entourer au moins partiellement la portion de fixation (210),
- on fournit un produit pour moulage (4) adapté pour que puisse être soudée sur ledit produit la paroi en film souple de la poche,
le procédé incluant les étapes suivantes :
- entourer au moins partiellement la portion de fixation (210) du connecteur (21) par l'élément de moulage (3) de manière à définir une cavité fermée entre la portion de fixation (210) et l'élément de moulage (3),
- verser le produit pour moulage (4) dans la cavité entre la portion de fixation (210) et l'élément de moulage (3),
- retirer l'élément de moulage (3), libérant le surmoulage (40) sur au moins une partie de la portion de fixation (210).

4. Procédé de fabrication d'un assemblage étanche selon l'une quelconque des revendications 1 à 3 dans lequel :
- le connecteur (21) est en polyfluorure de vinylidène (PVDF) et le surmoulage (40) est en polyéthylène haute densité (HDPE) ou en élastomère thermoplastique (TPE), ou
- le connecteur (21) est en polycarbonate (PC) et le surmoulage (40) est en polyéthylène haute densité (HDPE) ou en élastomère thermoplastique (TPE), ou
- le connecteur (21) est en acrylonitrile butadiène styrène (ABS) et le surmoulage (40) est en polyéthylène haute densité (HDPE) ou en élastomère thermoplastique (TPE), ou
- le connecteur (21) est en polybutylene terephthalate (PBT) et le surmoulage (40) est en polyéthylène haute densité (HDPE).

5. Procédé de fabrication d'un assemblage étanche selon l'une quelconque des revendications 1 à 4 dans lequel la paroi de la poche (1) est en film plastique, de préférence dans lequel le film plastique comprend une couche de polyéthylène (PE).

6. Procédé de fabrication d'un assemblage étanche selon la revendication 5 dans lequel une couche du film plastique qui est en regard du surmoulage est une couche de polyéthyène.

7. Procédé de fabrication d'un récipient étanche comprenant le procédé de fabrication d'un ensemble étanche selon l'une quelconque des revendications 1 à 6 et comprenant en outre une étape de remplissage de la poche par la deuxième ouverture d'accès (20), et une étape d'obturation de la deuxième ouverture d'accès (20) de la poche de sorte à fermer de façon étanche la poche (1) au niveau de sa deuxième ouverture d'accès (20) après fermeture étanche de l'ensemble au niveau du connecteur (21), et remplissage de la poche.

8. Procédé de fabrication d'un récipient étanche selon la revendication 7 dans lequel l'étape d'obturation consiste à souder sur elle-même la paroi de la poche (1) au niveau de sa deuxième ouverture d'accès (20).

9. Assemblage étanche comprenant :
- une poche (1) comprenant une paroi (8) en film souple, la paroi de ladite poche définissant un volume intérieur (V) de ladite poche, ladite poche (1) ayant deux extrémités opposées, une première ouverture d'accès (10) adaptée pour pouvoir faire communiquer le volume intérieur de la poche avec l'extérieur de la poche à la première extrémité, une deuxième ouverture d'accès (20) adaptée pour pouvoir faire communiquer le volume intérieur de la poche avec l'extérieur de la poche à la deuxième extrémité,
- un système de connexion (9), le système de connexion (9) comprenant un connecteur (21) adapté pour être mécaniquement connecté à un connecteur complémentaire d'une enceinte stérile (11) en vue d'une communication stérile entre la poche (1) et l'enceinte (11), le connecteur (21) comprenant une portion de fixation à la poche (210), **caractérisé en ce que** le système de connexion (9) comprend en outre un surmoulage (40) surmoulé sur la portion de fixation (210) et choisi dans un matériau adapté permettant le soudage de la paroi de poche (1) sur le surmoulage (40) à une température permettant que la paroi de la poche (1) et le surmoulage (40) fondent sans que le connecteur ne fonde.
la paroi de la poche (1) étant positionné en regard du surmoulage (40) au niveau de la première ouverture d'accès (10), la portion de fixation (210) entourant un espace de passage (24) entre la poche (1) et l'enceinte (11) au niveau de la première ouverture d'accès (10),
la paroi de la poche (1) étant soudée sur le surmoulage (40) de manière continue fermée le long de la première ouverture d'accès (10).

10. Assemblage étanche selon la revendication 9 dans lequel la portion de fixation (210) a une forme annulaire et dans lequel le surmoulage (40) forme un anneau autour de la portion de fixation (210).

11. Assemblage étanche selon l'une quelconque des revendications 9 à 10 dans lequel le connecteur (21) comprend une porte adaptée pour équiper l'ouverture d'accès (10) de la poche (1), la porte comprenant un dormant en forme de bride (200), la portion de fixation (210) étant au moins partie de la bride (200).

12. Assemblage étanche selon l'une quelconque des revendications 9 à 11 dans lequel la portion de fixation (210) du connecteur (21) comprend un corps (70) et un élément saillant (202), l'élément saillant (202) s'étendant radialement depuis ledit corps (70), ledit élément saillant (202) étant encapsulé dans le surmoulage (40).

13. Récipient étanche comprenant un assemblage étanche selon l'une quelconque des revendications 9 à 12, la deuxième ouverture d'accès (20) étant obturée de façon étanche.

14. Récipient étanche selon la revendication 13 dans lequel la deuxième ouverture d'accès (20) est obturée par une soudure sur elle-même de la paroi de la poche (1) au niveau de sa deuxième ouverture d'accès (20).

15. Ensemble étanche comprenant un récipient selon l'une quelconque des revendications 13 à 14, dans lequel le connecteur (21) est un premier connecteur, l'ensemble étanche comprenant en outre une enceinte rigide (5), comprenant un deuxième connecteur complémentaire du premier connecteur, le connecteur (21) du récipient étanche étant connecté de manière étanche au deuxième connecteur de ladite enceinte rigide (5).

## Patentansprüche

1. Verfahren zur Herstellung einer dichten Montage, wobei:
- ein Beutel (1) bereitgestellt wird, der eine Wand (8) aus einer elastischen Folie umfasst, wobei die Wand des Beutels ein Innenvolumen (V) des Beutels definiert, wobei der Beutel (1) zwei gegenüberliegende Enden hat, eine erste Zugangsöffnung (10) am ersten Ende, die geeignet ist, das Innenvolumen des Beutels mit außerhalb des Beutels in Kommunikation zu versetzen, eine zweite Zugangsöffnung (20) am zweiten Ende, die geeignet ist, das Innenvolumen des Beutels mit außerhalb des Beutels in Kommunikation zu versetzen,
- ein Verbindungssystem (9) bereitgestellt wird, wobei das Verbindungssystem (9) einen Verbinder (21) umfasst, der geeignet ist, mit einem komplementären Verbinder eines sterilen Behältnisses (11) zwecks einer sterilen Kommunikation zwischen dem Beutel (1) und dem Behältnis (11) mechanisch verbunden zu sein, wobei der Verbinder (21) einen Befestigungsabschnitt (210) am Beutel umfasst, **dadurch gekennzeichnet, dass** das Verbindungssystem (9) ferner eine Aufformung (40) umfasst, die auf dem Befestigungsabschnitt (210) aufgeformt ist und aus einem Material ausgewählt ist, das geeignet ist, das Verschweißen der Wand des Beutels (1) mit der Aufformung (40) zu gestatten, wobei das Herstellungsverfahren ferner die folgenden Schritte umfasst:
- Positionieren der Wand des Beutels (1) der Aufformung (40) zugewandt im Bereich der ersten Zugangsöffnung (10), wobei der Befestigungsabschnitt (210) einen Durchgangsraum (24) zwischen dem Beutel (1) und dem Behältnis (11) im Bereich der ersten Zugangsöffnung (10) umgibt,
- kontinuierlich verschließendes Verschweißen der Wand des Beutels (1) mit der Aufformung (40) entlang der ersten Zugangsöffnung (10) bei einer Temperatur, die gestattet, dass die Wand des Beutels (1) und die Aufformung (40) verschmelzen, ohne dass der Verbinder schmilzt.

2. Verfahren zur Herstellung einer dichten Montage nach Anspruch 1, wobei
- der Verbinder (21) eine radial äußere Oberfläche (22) umfasst, die radial nach außerhalb des Verbinders (21) zeigt,
- die Aufformung (40) eine radial innere Oberfläche (41) und eine radial äußere Oberfläche (42) gegenüber der radial inneren Oberfläche (41) der Aufformung (40) umfasst,
- der Beutel (1) eine innere Oberfläche (6) umfasst, die zum Innenvolumen (V) zeigt,
wobei die radial äußere Oberfläche (22) des Verbinders (21) der radial inneren Oberfläche (41) der Aufformung (40) zugewandt ist,
so dass beim Schritt des Positionierens der Aufformung (40) der Wand des Beutels (1) zugewandt die radial äußere Oberfläche (42) der Aufformung (40) ebenfalls der inneren Oberfläche (6) des Beutels (1) zugewandt angeordnet wird.

3. Verfahren zur Herstellung einer dichten Montage nach einem der Ansprüche 1 bis 2, umfassend ferner einen Schritt des Erhaltens der Aufformung (40), wobei:
- ein Formungselement (3) bereitgestellt wird, das geeignet ist, den Befestigungsabschnitt (210) mindestens zum Teil zu umgeben,
- ein zu formendes Produkt (4) bereitgestellt wird, das geeignet ist, damit die Wand aus elastischer Folie des Beutels mit dem Produkt verschweißbar ist,
wobei das Verfahren die folgenden Schritte einschließt:
- mindestens teilweises Umgeben des Befestigungsabschnitts (210) des Verbinders (21) durch das Formungselement (3) derart, dass ein geschlossener Hohlraum zwischen dem Befestigungsabschnitt (210) und dem Formungselement (3) definiert wird,
- Einleiten des zu formenden Produkts (4) in den Hohlraum zwischen den Befestigungsabschnitt (210) und das Formungselement (3),
- Entfernen des Formungselements (3), wodurch die Aufformung (40) auf mindestens einem Teil des Befestigungsabschnitts (210) freigegeben wird.

4. Verfahren zur Herstellung einer dichten Montage nach einem der Ansprüche 1 bis 3, wobei:
- der Verbinder (21) aus Polyvinylidenfluorid (PVDF) ist und die Aufformung (40) aus hochdichtem Polyethylen (HDPE) oder aus thermoplastischem Elastomer (TPE) ist, oder
- der Verbinder (21) aus Polycarbonat (PC) ist und die Aufformung (40) aus hochdichtem Polyethylen (HDPE) oder aus thermoplastischem Elastomer (TPE) ist, oder
- der Verbinder (21) aus Acrylnitril-Butadien-Styrol (ABS) ist und die Aufformung (40) aus hochdichtem Polyethylen (HDPE) oder aus thermoplastischem Elastomer (TPE) ist, oder
- der Verbinder (21) aus Polybutylenterephthalat (PBT) ist und die Aufformung (40) aus hochdichtem Polyethylen (HDPE) ist.

5. Verfahren zur Herstellung einer dichten Montage nach einem der Ansprüche 1 bis 4, wobei die Wand des Beutels (1) aus Kunststofffolie ist, vorzugsweise wobei die Kunststofffolie eine Polyethylenschicht (PE) umfasst.

6. Verfahren zur Herstellung einer dichten Montage nach Anspruch 5, wobei eine Schicht der Kunststofffolie, die der Aufformung zugewandt ist, eine Polyethyenschicht ist.

7. Verfahren zur Herstellung eines dichten Behälters, umfassend das Verfahren zur Herstellung einer dichten Montage nach einem der Ansprüche 1 bis 6 und umfassend ferner einen Schritt des Befüllens des Beutels durch die zweite Zugangsöffnung (20) und einen Schritt des Verschließens der zweiten Zugangsöffnung (20) des Beutels derart, dass der Beutel (1) im Bereich seiner zweiten Zugangsöffnung (20) nach dem dichten Verschließen der Montage im Bereich des Verbinders (21) dicht verschlossen ist, und Befüllen des Beutels.

8. Verfahren zur Herstellung eines dichten Behälters nach Anspruch 7, wobei der Schritt des Verschließens darin besteht, die Wand des Beutels (1) im Bereich seiner zweiten Zugangsöffnung (20) mit sich selbst zu verschweißen.

9. Dichte Montage, umfassend:
- einen Beutel (1), der eine Wand (8) aus einer elastischen Folie umfasst, wobei die Wand des Beutels ein Innenvolumen (V) des Beutels definiert, wobei der Beutel (1) zwei gegenüberliegende Enden hat, eine erste Zugangsöffnung (10), die geeignet ist, das Innenvolumen des Beutels mit außerhalb des Beutels in Kommunikation zu versetzen, am ersten Ende, eine zweite Zugangsöffnung (20), die geeignet ist, das Innenvolumen des Beutels mit außerhalb des Beutels in Kommunikation zu versetzen, am zweiten Ende,
- ein Verbindungssystem (9), wobei das Verbindungssystem (9) einen Verbinder (21) umfasst, der geeignet ist, mit einem komplementären Verbinder eines sterilen Behältnisses (11) zwecks einer sterilen Kommunikation zwischen dem Beutel (1) und dem Behältnis (11) mechanisch verbunden zu sein, wobei der Verbinder (21) einen Befestigungsabschnitt (210) am Beutel umfasst, **dadurch gekennzeichnet, dass** das Verbindungssystem (9) ferner eine Aufformung (40) umfasst, die auf dem Befestigungsabschnitt (210) aufgeformt ist und aus einem Material ausgewählt ist, das geeignet ist, das Verschweißen der Wand des Beutels (1) mit der Aufformung (40) bei einer Temperatur zu gestatten, die gestattet, dass die Wand des Beutels (1) und die Aufformung (40) verschmelzen, ohne dass der Verbinder schmilzt,
wobei die Wand des Beutels (1) im Bereich der ersten Zugangsöffnung (10) der Aufformung (40) zugewandt positioniert ist, wobei der Befestigungsabschnitt (210) einen Durchgangsraum (24) zwischen dem Beutel (1) und dem Behältnis (11) im Bereich der ersten Zugangsöffnung (10) umgibt,
wobei die Wand des Beutels (1) mit der Aufformung (40) entlang der ersten Zugangsöffnung (10) kontinuierlich verschlossen verschweißt ist.

10. Dichte Montage nach Anspruch 9, wobei der Befestigungsabschnitt (210) eine ringförmige Form hat und wobei die Aufformung (40) einen Ring um den Befestigungsabschnitt (210) bildet.

11. Dichte Montage nach einem der Ansprüche 9 bis 10, wobei der Verbinder (21) eine Tür umfasst, die geeignet ist, die Zugangsöffnung (10) des Beutels (1) auszustatten, wobei die Tür einen Rahmen in Form eines Flansches (200) umfasst, wobei der Befestigungsabschnitt (210) mindestens Teil des Flansches (200) ist.

12. Dichte Montage nach einem der Ansprüche 9 bis 11, wobei der Befestigungsabschnitt (210) des Verbinders (21) einen Körper (70) und ein vorstehendes Element (202) umfasst, wobei sich das vorstehende Element (202) radial ab dem Körper (70) erstreckt, wobei das vorstehende Element (202) in der Aufformung (40) verkapselt ist.

13. Dichter Behälter, umfassend eine dichte Montage nach einem der Ansprüche 9 bis 12, wobei die zweite Zugangsöffnung (20) dicht verschlossen ist.

14. Dichter Behälter nach Anspruch 13, wobei die zweite Zugangsöffnung (20) durch Verschweißen der Wand des Beutels (1) im Bereich seiner zweiten Zugangsöffnung (20) mit sich selbst verschlossen ist.

15. Dichte Montage, umfassend einen Behälter nach einem der Ansprüche 13 bis 14, wobei der Verbinder (21) ein erster Verbinder ist, wobei die dichte Montage ferner ein starres Behältnis (5) umfasst, umfassend einen zweiten komplementären Verbinder des ersten Verbinders, wobei der Verbinder (21) des dichten Behälters mit dem zweiten Verbinder des starren Behältnisses (5) dicht verbunden ist.

## Claims

1. A method for manufacturing a leaktight assembly wherein:
- a bag (1) comprising a wall (8) of flexible film is provided, the wall of said bag defining an internal volume (V) of said bag, said bag (1) having two opposite ends, a first access opening (10) at the first end adapted for placing the internal volume of the bag in communication with the outside of the bag, a second access opening (20) at the second end adapted for placing the internal volume of the bag in communication with the outside of the bag,
- a connection system (9) is provided, the connection system (9) comprising a connector (21) adapted for mechanical connection to a complementary connector of a sterile chamber (11) in order to establish a sterile communication between the bag (1) and the chamber (11), the connector (21) comprising a portion for attachment (210) to the bag, **characterized in that** the connection system (9) further comprises an overmolding (40) molded over the attachment portion (210) and chosen from a suitable material allowing the welding of the bag (1) wall to the overmolding (40),
the manufacturing method further comprising the steps of:
- positioning the wall of the bag (1) facing the overmolding (40) at the first access opening (10), the attachment portion (210) surrounding a space for passage (24) between the bag (1) and the chamber (11) at said first access opening (10),
- welding the wall of the bag (1) to the overmolding (40) in a closed continuous manner all along the first access opening (10) at a temperature allowing the wall of the bag (1) and the overmolding (40) to melt without the connector melting.

2. The method for manufacturing a leaktight assembly according to claim 1, wherein
- said connector (21) comprises a radially outer surface (22) directed radially outward of the connector (21),
- the overmolding (40) comprises a radially inner surface (41) and a radially outer surface (42) opposite to the radially inner surface (41) of the overmolding (40),
- the bag (1) comprises an inner surface (6) facing towards the internal volume (V),
the radially outer surface (22) of the connector (21) facing the radially inner surface (41) of the overmolding (40),
such that during the step of positioning the overmolding (40) to face the wall of the bag (1), the radially outer surface (42) of the overmolding (40) is also positioned facing the inner surface (6) of the bag (1).

3. The method for manufacturing a leaktight assembly according to any one of claims 1 to 2, further comprising a step of obtaining the overmolding (40), wherein:
- a molding member (3) adapted to at least partially surround the attachment portion (210) is provided,
- a molding product (4) suitable for welding the wall of flexible film of the bag to said product is provided,
the method including the steps of:
- at least partially surrounding the attachment portion (210) of the connector (21) by the molding member (3) so as to define a closed cavity between the attachment portion (210) and the molding member (3),
- pouring the molding product (4) into the cavity between the attachment portion (210) and the molding member (3),
- removing the molding member (3), freeing the overmolding (40) over at least a portion of the attachment portion (210).

4. The method for manufacturing a leaktight assembly according to any one of claims 1 to 3, wherein
- the connector (21) is of polyvinylidene fluoride (PVDF) and the overmolding (40) is of high density polyethylene (HDPE) or thermoplastic elastomer (TPE), or
- the connector (21) is of polycarbonate (PC) and the overmolding (40) is of high density polyethylene (HDPE) or thermoplastic elastomer (TPE), or
- the connector (21) is of acrylonitrile butadiene styrene (ABS) and the overmolding (40) is of high density polyethylene (HDPE) or thermoplastic elastomer (TPE), or
- the connector (21) is of polybutylene terephthalate (PBT) and the overmolding (40) is of high density polyethylene (HDPE).

5. The method for manufacturing a leaktight assembly according to any one of claims 1 to 4, wherein the wall of the bag (1) is of plastic film, preferably wherein the plastic film comprises a layer of polyethylene (PE).

6. The method for manufacturing a leaktight assembly according to claim 5, wherein a layer of plastic film which faces the overmolding is a layer of polyethylene.

7. A method for manufacturing a leaktight container, comprising the method for manufacturing a leaktight assembly according to any one of claims 1 to 6, and further comprising a step of filling the bag by the second access opening (20), and a step of closing the second access opening (20) of the bag so as to close the bag (1) in a leaktight manner at its second access opening (20) after closing the assembly in a leaktight manner at the connector (21), and filling the bag.

8. The method for manufacturing a leaktight container according to claim 7, wherein the closing step consists of welding the wall of the bag (1) to itself at its second access opening (20).

9. A leaktight assembly comprising:
- a bag (1) comprising a wall (8) of flexible film, the wall of said bag defining an internal volume (V) of said bag, said bag (1) having two opposite ends, a first access opening (10) adapted for placing the internal volume of the bag in communication with the outside of the bag at the first end, a second access opening (20) adapted for placing the internal volume of the bag in communication with the outside of the bag at the second end,
- a connection system (9), the connection system (9) comprising a connector (21) adapted for mechanical connection to a complementary connector of a sterile chamber (11) in order to establish a sterile communication between the bag (1) and the chamber (11), the connector (21) comprising a portion for attachment to the bag (210), **characterized in that** the connection system (9) further comprises an overmolding (40) molded over the attachment portion (210) and chosen from a suitable material allowing the welding of the bag (1) wall to the overmolding (40) at a temperature allowing the wall of the bag (1) and the overmolding (40) to melt without the connector melting,
the wall of the bag (1) being positioned facing the overmolding (40) at the first access opening (10), the attachment portion (210) surrounding a space for passage (24) between the bag (1) and the chamber (11) at the first access opening (10),
the wall of the bag (1) being welded to the overmolding (40) in a closed continuous manner all along the first access opening (10).

10. The leaktight assembly according to claim 9, wherein the attachment portion (210) has an annular shape and wherein the overmolding (40) forms a ring around the attachment portion (210) .

11. The leaktight assembly according to any one of claims 9 to 10, wherein the connector (21) comprises a door adapted to equip the access opening (10) of the bag (1), the door comprising a flange-shaped frame (200), the attachment portion (210) being at least a portion of the flange (200).

12. The leaktight assembly according to any one of claims 9 to 11, wherein the attachment portion (210) of the connector (21) comprises a body (70) and a projecting member (202), the projecting member (202) extending radially from said body (70), said projecting member (202) being encapsulated in the overmolding (40).

13. A leaktight container comprising a leaktight assembly according to any one of claims 9 to 12, the second access opening (20) being closed in a leaktight manner.

14. The leaktight container according to claim 13, wherein the second access opening (20) is closed by welding the wall of the bag (1) to itself at its second access opening (20).

15. A leaktight assembly comprising a container according to any one of claims 13 to 14, wherein the connector (21) is a first connector, the leaktight assembly further comprising a rigid chamber (5), comprising a second connector complementary to the first connector, the connector (21) of the leaktight container being connected in a leaktight manner to the second connector of said rigid chamber (5).
